Europäisches Patentamt

European Patent Office

Office européen des brevets

(11) Numéro de publication : **0 431 988 A1**

## (12) DEMANDE DE BREVET EUROPEEN

(21) Numéro de dépôt : **90402904.8**

(22) Date de dépôt : **16.10.90**

(51) Int. Cl.⁵ : **A01C 7/08**, A01C 15/00, A01B 73/00

(30) Priorité : **07.12.89 FR 8916202**

(43) Date de publication de la demande :
**12.06.91 Bulletin 91/24**

(84) Etats contractants désignés :
**DE ES IT**

(71) Demandeur : **ATELIERS RIBOULEAU**
**F-79240 Largeasse (FR)**

(72) Inventeur : **Ribouleau, Michel Robert**
**4 Avenue Paul-Déroulède**
**F-75015 Paris (FR)**

(74) Mandataire : **Tilliet, René Raymond Claude et al**
**Cabinet Lavoix 2, Place d'Estienne d'Orves**
**F-75441 Paris Cédex 09 (FR)**

(54) **Châssis porte-outil de largeur variable pour appareil agricole tel qu'un semoir ou distributeur de précision.**

(57)    L'invention a pour objet un châssis porte-outil de longueur variable pour appareil agricole tel qu'un semoir ou distributeur de précision, comportant une barre porte-outil rétractable (4) qui supporte plusieurs outils élémentaires qui sont disposés à espacements réguliers réglables et qui sont actionnés chacun par un dispositif d'entraînement monté à coulissement sur un arbre d'entraînement commun (5) qui est lui-même actionné par au moins une roue porteuse (3).

L'arbre d'entraînement (5) est constitué d'un élément femelle central (21) qui porte tous les dispositifs d'entraînement (B, C, D, E) à l'exception des deux extérieurs (A, F) et à chaque extrémité duquel est monté à coulissement un élément mâle (22) sans possibilité de rotation, chaque élément mâle (22) présentant, à son extrémité libre, une partie (23) qui présente, en section transversale, le même profil que l'élément femelle central précité (21) et qui porte un dispositif d'entraînement extérieur.

Application aux semoirs monograines à six rangs.

FIG.3

Jouve, 18, rue Saint-Denis, 75001 PARIS

# CHASSIS PORTE-OUTIL DE LARGEUR VARIABLE POUR APPAREIL AGRICOLE TEL QU'UN SEMOIR OU DISTRIBUTEUR DE PRECISION

L'invention concerne un châssis porte-outil de largeur variable pour appareil agricole tel qu'un semoir ou distributeur de précision, comprenant une barre porte-outil rétractable qui supporte plusieurs outils élémentaires qui sont disposés à espacement régulier réglable et qui sont actionnés chacun par un dispositif d'entraînement monté à coulissement sur un arbre d'entraînement commun qui est lui-même actionné par au moins une roue porteuse.

Dans ces appareils agricoles, chaque outil élémentaire doit être entraîné à une vitesse qui est proportionnelle à la vitesse d'avancement de l'appareil lui-même de manière à assurer la régularité d'un semis ou d'une distribution de fertilisant.

L'arbre d'entraînement des outils élémentaires, tels qu'une tête de semoir, doit s'étendre au moins en position de travail, sur toute la largeur de l'appareil afin d'entraîner tous les outils élémentaires à la même vitesse.

Dans les appareils connus, en particulier dans les semoirs monograines à six rangs, la barre d'entraînement est constituée d'éléments mâles qui portent les dispositifs d'entraînement précités et qui peuvent coulisser dans des éléments femelles constituant des fourreaux entraînés par les roues porteuses. Dans ces semoirs de type connu, les possibilités de réglage de l'écartement entre deux rangs voisins sont très faibles et, même si on se limite à un seul type de plantation telle que le maïs, il est souvent nécessaire de changer les éléments mâles porteurs des dispositifs d'entraînement et les fourreaux pour obtenir des écartements différents entre les rangs.

La présente invention a pour objet un châssis porte-outil de largeur variable du type précité qui permet de pallier cet inconvénient.

Il est caractérisé en ce que l'arbre d'entraînement est constitué d'un élément femelle central qui porte tous les dispositifs d'entraînement à l'exception des deux extérieurs et à chaque extrémité duquel est monté à coulissement un élément mâle sans possibilité de rotation, chaque élément mâle présentant à son extrémité libre, une partie qui présente, en section transversale, le même profil que l'élément femelle central précité et qui porte un dispositif d'entraînement extérieur.

De cette manière, l'écartement des rangs intérieurs peut être facilement réglé dans de larges mesures en faisant simplement coulisser les outils élémentaires et leurs dispositifs d'entraînement, ces derniers coulissant sur l'élément femelle central ; le réglage de l'écartement des deux outils élémentaires extérieurs est effectué en faisant coulisser chaque élément mâle extérieur dans l'élément central femelle. Par ailleurs, l'élément central étant de grande longueur il s'étend entre les roues porteuses et même au-delà de celles-ci de telle sorte que l'axe femelle central peut être entraîné par les deux roues porteuses.

Avantageusement, la longueur de l'élément central femelle de l'axe d'entraînement est sensiblement égale à celle de la partie centrale de la barre porte-outil. Les outils élémentaires des rangs intérieurs étant portés par l'élément tubulaire central femelle de l'axe d'entraînement, le réglage d'écartement maximal est celui autorisé par la longueur de la partie femelle de la barre porte-outil.

Selon un mode de réalisation de l'invention, la section intérieure de l'élément central femelle et la section extérieure des parties des éléments mâles engagées dans celle-ci sont polygonales et de préférence carrées.

Selon un mode de réalisation de l'invention, le passage de la position de travail à la position rétractée et inversement est réalisée par des verins hydrauliques.

D'autres caractéristiques et avantages de l'invention ressortiront de la description qui suit faite en se rapportant aux dessins ci-annexés sur lesquels :
– Les figs 1 et 2 montrent un châssis connu en position de travail et en position rétractée, et
– Les figs 3 et 4 sont des vues correspondantes d'un châssis porte-outil conforme à la présente invention.

L'invention est décrite ci-après en application à un semoir de précision ou semoir monograine à six rangs.

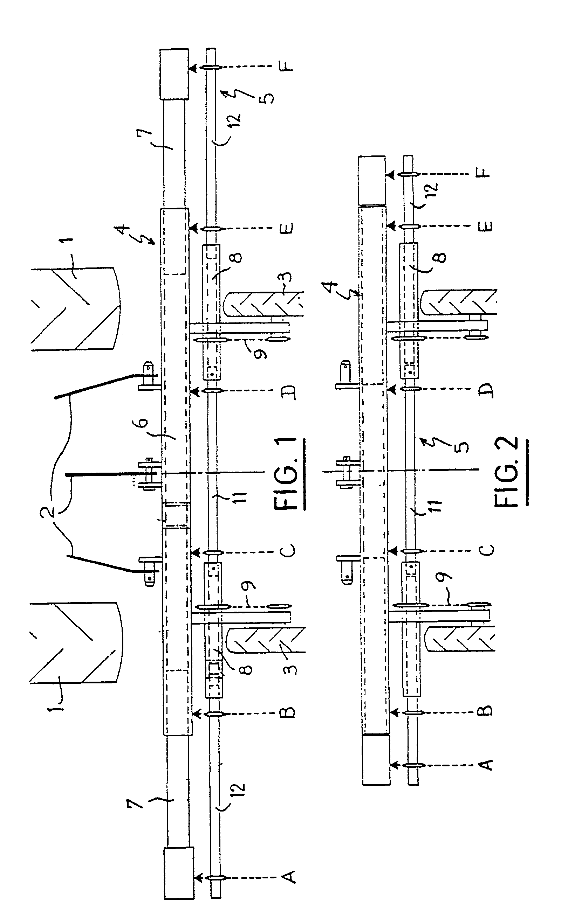

Les semoirs monograines à six rangs comportent un châssis porte-outil comprenant une barre porte-outil comprenant une partie centrale tubulaire dans laquelle coulisse, à chacune de ses extrémités, une partie mâle, ladite partie centrale portant quatre éléments semeurs intérieurs et chacune des parties mâles un élément semeur extérieur, et un axe rotatif de commande des éléments semeurs, ledit axe de commande étant constitué d'éléments tubulaires mâles et femelles coulissant les uns dans les autres et portant les pignons d'entraînement A, B, C, D, E et F des éléments semeurs (non représentés). Un tel châssis de type connu est représenté sur les figures 1 et 2. Le semoir monograine est tracté par un tracteur dont on voit les roues 1 et l'attelage trois points 2 ; le semoir comporte deux roues porteuses 3, qui supportent un châssis porte-outil comprenant une barre porte-outil 4 et un axe d'entraînement 5. La barre porte-outil comporte une partie centrale tubulaire 6 dans les extrémités de laquelle, à chaque extrémité, coulisse une partie mâle 7 ; la partie centrale 6 qui s'étend sur une grande largeur supporte 4 éléments semeurs intérieurs alors que chaque partie mâle 7 supporte un seul élément semeur extérieur.

l'axe de commande 5 comporte deux éléments femelles de faible longueur 8 constituant des fourreaux et qui sont disposés chacun au niveau d'une roue porteuse 3 ; chacun de ces fourreaux est entraîné en rotation par la roue porteuse voisine 3, par exemple par l'intermédiaire d'une transmission à chaîne et pignons dentés 9.

Entre les deux fourreaux 8 se trouve un élément central mâle 11 dont la section extérieure correspond à la section intérieure des fourreaux 8 et dont les extrémités sont engagées chacune dans un fourreau 8. Les autres extrémités des fourreaux 8 reçoivent un élément mâle extérieur 12 qui peut coulisser dans le fourreau 8 correspondant. Les éléments mâles 11 et 12 portent chacun deux des pignons d'entraînement A, B, C, D, E et F des éléments semeurs repérés.

La Fig. 1 représente le semoir dans sa position de travail, les éléments mâles 7 de la barre porte-outil et 12 de l'axe de commande étant dégagés des éléments femelles 6 et 8. Les éléments semeurs et leurs dispositifs d'entraînement (par exemple des pignons solidaires de l'axe 5) A, B, C, D, E et F sont disposés avec un écart entre rangs maximal, égal par exemple à 80 cm, si bien que l'ensemble du semoir a une largeur d'environ 4, 3 mètres. Dans la position rétractée de transport représentée à la fig. 2, les éléments mâles 7 et 12 sont rentrés au maximum dans les éléments femelles 6 et 8 si bien que la largeur du semoir n'est plus que d'environ 3 mètres. On voit que cette disposition de châssis permet, par le passage en position rétractée des deux élément semeurs extérieurs, de réduire notablement la largeur du semoir pour le transport. Toutefois, l'écart entre rangs de 80 cm est une valeur pratiquement maximale et il est souvent désirable de la réduire par exemple à 70 cm suivant le gré de l'utilisateur. Or du fait que, en particulier, les éléments semeurs B et E sont voisins de l'extrémité extérieure de l'élément femelle 8, une telle réduction de l'écartement entre rangs est pratiquement impossible.

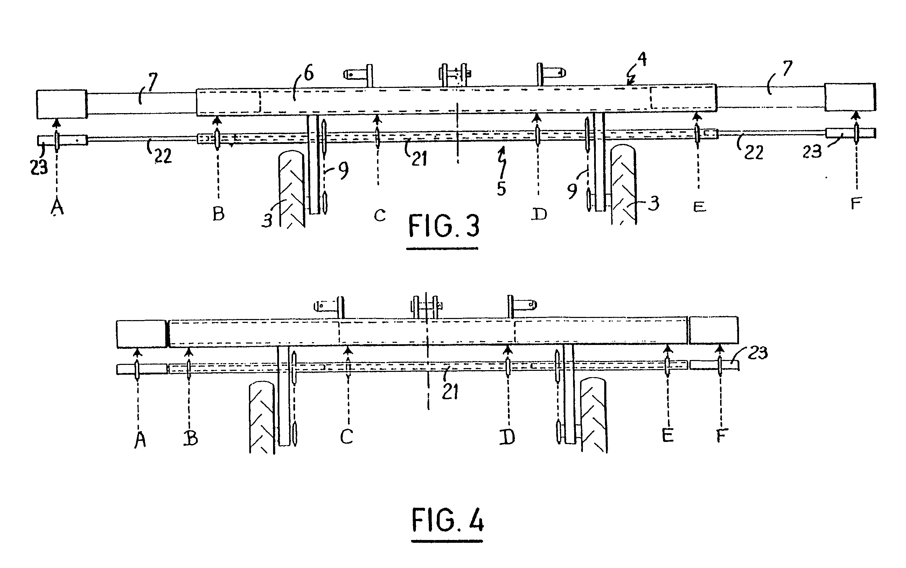

Sur les figures 3 et 4, les éléments correspondant à ceux des figures 1 et 2 ont été repérés par les mêmes références numériques. En fait, le châssis porte-outil diffère du châssis connu et représenté à la fig. 1 et 2 simplement en ce qui concerne la structure de son axe d'entraînement. Selon l'invention, cet axe d'entraînement des éléments semeurs est constitué d'un élément femelle central 21 qui est disposé parallèlement à la barre porte-outil 4 et dont la longueur correspond sensiblement à la longueur de cette dernière. Cet élément central 21 est entraîné par les deux roues porteuses 3 par les dispositifs d'entraînement 9 ; il porte les quatre pignons d'entraînement B, C, D et E des quatre éléments intérieurs.

Par ailleurs, à chacune de ses extrémités, l'élément central 21 reçoit un élément mâle monté de manière rétractable 22 ; chacun des éléments mâles 22 présente à son extrémité libre une partie 23 de faible longueur et de section extérieure égale à celle de l'élément central 21, qui porte le pignon d'entraînement A respectivement F de l'élément semeur extérieur.

La section intérieure de l'élément femelle 21 correspond à la section extérieure des éléments mâles 22 ; avantageusement cette section est de forme polygonale de manière à permettre le blocage en rotation des deux éléments l'un sur l'autre ; de préférence ces deux sections sont carrées ou hexagonales. On peut également utiliser des sections rondes avec rainure et clavette de blocage.

La commande du coulissement des arbres 22 dans l'arbre 21 s'effectue de préférence par commande hydraulique à l'aide de vérins (non représentés). Avantageusement, on prévoit une commande qui permet de bloquer les éléments mâles 22 en position intermédiaire.

Alors que pour les semoirs rétractables de type connu, la marge de réglage de l'écartement entre rangs est très faible et que, pour obtenir une marge de réglage importante, on est amené à changer les éléments tubulaires femelles 8 et mêmes les éléments tubulaires mâles 11 et 12, avec l'axe d'entraînement selon la présente invention, on peut régler dans une grande gamme de réglage l'écartement entre rangs simplement en déplaçant les éléments semeurs sur la barre porte-outil, avec leurs pignons d'entraînement qui coulissent sur l'élément tubulaire central 21 et sur les extrémités 23 des éléments mâles 22. Le fait de pouvoir bloquer les éléments mâles extérieurs 22 en des positions intermédiaires entre la position de travail de la fig. 3 et la position de transport de la fig. 4, permet d'étendre encore les possibilités de réglage. En fait, la possibilité de réglage peut être limitée par le gabarit extérieur des roues porteuses 3, les éléments semeurs B et E étant alors proches des roues 3. Dans l'exemple représenté, cela conduit à une possibilité de réglage de l'écartement des rangs entre 80 et 60 cm.

Par ailleurs, compte tenu du fait que les roues porteuses 3 entraînent un seul élément, à savoir l'élément tubulaire central 21, un glissement éventuel entre les deux roues porteuses 3, n'entraînera pas de contrainte dans les liaisons mécaniques entre la pièce centrale 21 et les pièces extérieures 22.

## Revendications

1. Châssis porte-outil de longueur variable pour appareil agricole tel qu'un semoir ou distributeur de précision, comportant une barre porte-outil rétractable (4) qui supporte plusieurs outils élémentaires qui sont disposés à espacements réguliers réglables et qui sont actionnés chacun par un dispositif d'entraînement (A, B, C, D, E, F) monté à coulissement sur un arbre d'entraînement commun (5) qui est lui-même actionné par au moins une roue porteuse (3), caractérisé en ce que ledit arbre d'entraînement (5) est constitué d'un élément femelle central (21) qui porte tous les dispositifs d'entraînement (B, C, D, E) à l'exception des deux extérieurs (A, et F) et à chaque extrémité duquel est monté à coulissement un élément mâle (22) sans possibilité de rotation, chaque élément mâle (22) présentant, à son extrémité libre, une partie (23) qui présente, en section transversale, le même profil que l'élément femelle central précité (21) et qui porte un dispositif d'entraînement extérieur (A, F).

2. Châssis porte-outil selon la revendication 1, caractérisé en ce que la longueur de l'élément femelle (21) de l'axe d'entraînement (5) est sensiblement égale à celle de la partie centrale (6) de la barre porte-outil (4).

3. Châssis porte-outil selon la revendication 1 ou 2, caractérisé en ce que la section intérieure de l'élément central femelle (21) et la section extérieure des éléments mâles extérieurs (22) sont polygonales.

4. Châssis porte-outil selon la revendication 3, caractérisé en ce que la section intérieure de l'élément central femelle (21) et la section extérieure des éléments mâles extérieurs (22) sont carrées.

5. Châssis porte-outil selon l'une quelconque des revendications 1 à 4, caractérisé en ce que l'élément central femelle (21) de l'axe d'entraînement (5) est entraîné en rotation par chacune des roues porteuses (3) de l'appareil agricole.

6. Châssis porte-outil selon l'une quelconque des revendicitions 1 à 5, caractérisé en ce que les deux éléments mâles (22) de l'axe d'entraînement (5) peuvent être maintenus en position intermédiaire.

7. Châssis porte-outil selon l'une quelconque des revendications 1 à 6, caractérisé en ce que le déploiement et la rétraction du châssis sont réalisées par des vérins hydrauliques.

EP 0 431 988 A1

FIG. 1

FIG. 2

EP 0 431 988 A1

FIG. 3

FIG. 4

EP 0 431 988 A1

Office européen
des brevets

**RAPPORT DE RECHERCHE EUROPEENNE**

Numero de la demande

EP    90 40 2904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-797923 (MASSEY-HARRIS-FERGUSON)<br>* page 1, ligne 74 - page 4, ligne 73; figures 1-7 *<br>--- | 1, 3, 4 | A01C7/08<br>A01C15/00<br>A01B73/00 |
| A | US-A-2758555 (BUHR)<br>* colonne 3, ligne 25 - colonne 16, ligne 56; figures 1-10 *<br>--- | 1, 2 | |
| A | US-A-2656801 (HANSEN)<br>* colonne 5, ligne 4 - colonne 11, ligne 75; figures 1-20 *<br>----- | 1, 4 | |

| DOMAINES TECHNIQUES RECHERCHES (Int. Cl.5) |
|---|
| A01C<br>A01B |

Le présent rapport a été établi pour toutes les revendications

| Lieu de la recherche | Date d'achèvement de la recherche | Examinateur |
|---|---|---|
| LA HAYE | 13 MARS 1991 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)

7